# FASCICULE DE BREVET EUROPEEN

(11) **EP 0 570 262 B1**
(45) Date de publication et mention de la délivrance du brevet: **28.02.1996**
(21) Numéro de dépôt: 93401172.7
(22) Date de dépôt: 06.05.1993
(51) Int. Cl.: B65G 35/06, B61B 13/12

(54) **Dispositif de convoyage de supports de charges**
Fördervorrichtung für Lastträger
Conveyor device for load supports

(30) Priorité: 12.05.1992 FR 9205730
(43) Date de publication de la demande: 18.11.1993
(73) Titulaire: RENAULT AUTOMATION, F-92100 Boulogne (FR)
(72) Inventeur: Thurier, Yvan, F-94320 Thiais (FR)
(74) Mandataire: Robert, Jean-Pierre

(56) Documents cités:
- CH-A- 436 380
- DE-A- 3 218 012
- DE-A- 3 912 120
- DE-C- 3 733 585
- GB-A- 2 068 316
- NL-A- 8 202 528

## Description

La présente invention concerne un dispositif de convoyage de supports de charges, par exemple des plate-formes ou des palettes.

Il existe dans le domaine industriel de nombreux types de convoyeurs pour transporter des pièces ou des ensembles de pièces assemblées entre des stations d'usinage ou d'assemblage. Ces convoyeurs comportent tous une voie de guidage de chaque support de charge et un mécanisme d'entraînement de ce support le long de cette voie.

On peut distinguer deux groupes de mécanismes d'entraînement selon qu'ils assurent ou non le support vertical de la palette. Les convoyeurs à galets ou à rouleaux moteurs, à friction, appartiennent au groupe dans lequel le support vertical et l'entraînement de la charge sont assurés par les mêmes moyens. On citera également dans ce même groupe, les convoyeurs dans lesquels la charge ou son support reposent sur au moins une courroie marginale qui assure son entraînement par friction, bien que le support de la charge soit en partie réalisé par la structure de guidage.

Dans le second groupe, le support roule au moyen de billes ou de galets sur la voie de guidage, son entraînement étant réalisé par une chaîne coopérant avec un taquet (ou une roue dentée) solidaire du support. De nombreuses variantes existent et dans tous les mécanismes connus, l'entraînement est réalisé par friction ce qui permet un débrayage entre l'organe moteur en mouvement continu et le support de charge qui peut ou doit être immobilisé, soit dans des zones d'accumulation, soit au voisinage de stations desservies par le convoyeur. Ce débrayage laisse subsister un effort de frottement permanent entre l'organe d'entraînement et le support de charge qui est consommateur d'énergie et engendre une usure importante exigeant une maintenance assez lourde de l'installation dont le rendement est faible.

On mentionnera enfin dans ce deuxième groupe les convoyeurs du type à tube ou axe tournant sur lui-même le long de la voie de guidage avec lequel coopère une roue d'entraînement pivotant autour d'un axe du support de charge perpendiculaire à l'axe du tube. Selon son orientation par rapport à la surface extérieure du tube sur laquelle elle porte, la roue d'entraînement décrit du fait de la rotation du tube une hélice de pas plus ou moins grand engendrant une translation du support par rapport au tube plus ou moins rapide selon une vitesse qui est une fraction de la vitesse de rotation du tube. Lorsque le plan de roulement de la roue est perpendiculaire à l'axe du tube, le pas de l'hélice est nul et le support reste immobile le long de la voie de guidage comme s'il était désaccouplé de l'organe d'entraînement (voir par exemple le document DE-C-3 733 585).

Pour disposer d'une force de propulsion du support, il faut appliquer la roue d'entraînement sur le tube sous un effort sensible engendré par exemple par un dispositif à ressort. La palette, pour encaisser cet effort, doit soit présenter un poids suffisant, soit être retenue par la voie de guidage sur laquelle elle vient s'appuyer. Cette nécessité implique une construction relativement complexe qui est souvent dissymétrique dans la répartition des efforts. Cette dissymétrie est notamment rencontrée lorsque le tube rotatif coopère avec la palette en dehors de son axe longitudinal de symétrie. Cette disposition latérale du tube dans la voie de guidage est souvent imposée par la nécessité de disposer d'un espace dégagé au centre de cette voie. Les efforts de transmission ont des composants parasites qui engendrent alors un couple sur la palette qui doit être centré par les rives de guidage. Ces contraintes ont limité jusqu'à aujourd'hui l'emploi de ce type de convoyeurs à des applications spécifiques.

La présente invention entend améliorer le rendement de ce type d'équipement en proposant un convoyeur dans lequel les dissipations d'énergie par frottement sont fortement diminuées, qui est de construction simple et qui permet de contrôler sans difficulté les accélérations et décélérations du support de charge lors de l'arrêt et du démarrage de ce dernier.

A cet effet, l'invention a donc pour objet un dispositif de convoyage pour supports de charges généralement plans, comprenant une voie de guidage latéral pour chaque support et un moyen d'entraînement de chaque support le long de cette voie, qui comporte deux tubes ou arbres tournant sur eux-mêmes et s'étendant le long de la voie de guidage et au moins deux galets d'entraînement portés par chaque support de charge de manière connue en elle-même, chacun en pivotement autour d'un axe perpendiculaire à l'axe du tube avec la surface duquel le galet est en contact. Cette disposition avec deux tubes tournants permet d'équilibrer les efforts d'entraînement de la palette et ainsi d'éviter au moins partiellement les usures dissymétriques des éléments en mouvement les uns par rapport aux autres.

Selon des variantes de réalisation possibles, les tubes tournants peuvent tourner soit dans le même sens soit en sens contraire l'un de l'autre, cette dernière possibilité rendant plus complexe la réalisation des moyens de commande en pivotement des galets d'entraînement.

Dans une première variante de réalisation de ce dispositif dans laquelle les moyens d'entraînement constituent également les moyens de support vertical de chaque palette porte-charge, chaque palette ou support comporte au moins quatre galets montés en pivotement autour d'axes perpendiculaires à ce support sous ce dernier pour reposer par paire sur la génératrice supérieure de chacun des tubes tournants.

Dans un mode préféré de réalisation de cette première variante, chaque support est en forme de palette quadrangulaire et comporte un premier groupe de quatre galets montés en pivotement autour d'axes perpendiculaires au plan de la palette et à chacun de ses coins, chaque galet étant doublé le long de chaque côté du coin correspondant, d'un galet secondaire éloigné du galet de coin d'une valeur déterminée, fonction de la largeur des interruptions entre tronçons successifs de tube ou axe d'entraînement.

Dans une seconde variante, chaque galet est monté à pivotement autour d'un axe sensiblement parallèle au plan horizontal du support et est appliqué contre le tube de l'arbre correspondant au moyen d'un organe élastique, le support présentant des organes inférieurs de roulement.

Dans chacune de ces variantes, chaque support comporte un mécanisme de commande synchronisée de l'inclinaison des galets autour de leur axe commandé par un poussoir mobile par rapport à ce support.

Dans la première variante qui correspond à un dispositif dans lequel les tubes sont tournants en sens inverse, ce mécanisme comporte une poulie crantée solidaire en rotation de chaque porte-galet pivotant sur l'axe correspondant et deux courroies crantées de transmission à ces poulies du mouvement engendré par le poussoir en forme de crémaillère double engrènant avec deux pignons opposés chacun solidaire en rotation d'une poulie d'entraînement d'une courroie.

Dans le mode de réalisation préféré de cette première variante, il sera plus simple de faire tourner les deux tubes dans le même sens. Dans ce cas le mécanisme de commande synchronisée de l'inclinaison des galets autour de leur axe comporte une poulie crantée solidaire en rotation de chaque porte-galet pivotant et une courroie crantée de transmission à toutes ces poulies d'un mouvement de commande engendré par le déplacement de l'un de quatre poussoirs mobiles perpendiculairement à chaque bord du support.

Dans l'autre variante, le mécanisme comporte une roue dentée solidaire en rotation de chaque porte-galet pivotant autour de l'axe correspondant et deux crémaillères engrènant avec ces roues et solidaires l'une de l'autre et du poussoir susdit.

Dans certains cas, on peut prévoir un organe de rappel du poussoir dont l'effet tend à le placer dans une position initiale correspondant à une inclinaison des galets d'entraînement telle que leur plan de rotation n'est pas perpendiculaire à l'axe des tubes rotatifs.

Enfin, le dispositif selon l'invention comporte un bâti fixe dont la partie supérieure détermine des rives latérales de guidage pour les supports en regard desquels ces supports possèdent des galets latéraux de roulement.

D'autres caractéristiques et avantages ressortiront de la description de deux variantes de réalisation de l'invention, donnée ci-après à titre indicatif.

Il sera fait référence aux dessins annexés dans lesquels :
- la figure 1 est une vue en coupe transversale selon la ligne I-I de la figure 2 d'un premier mode de réalisation de l'invention,
- la figure 2 est une vue de dessus d'un dispositif conforme à la figure 1,
- la figure 3 est une vue agrandie de détail de la figure 1,
- la figure 4 illustre une variante de détail de réalisation de ce premier mode de réalisation dans un détail de construction,
- la figure 5 est une vue semblable aux figures 3 et 4 d'une variante de ce premier mode de réalisation adapté à un chemin de guidage comportant deux voies perpendiculaires,
- la figure 6 est une vue de dessus d'un dispositif conforme à la figure 5,
- la figure 7 est une vue de détail identique aux figures 3, 4 et 5 d'un second mode de réalisation de l'invention,
- la figure 8 est une vue de dessus partielle de cette seconde variante de réalisation.

Dans chacune de ces figures, le support de charge est représenté par une palette 1 quadrangulaire, équipée à chacun de ses angles d'un galet de guidage 2 monté tournant autour d'un axe 3 perpendiculaire à la palette 1.

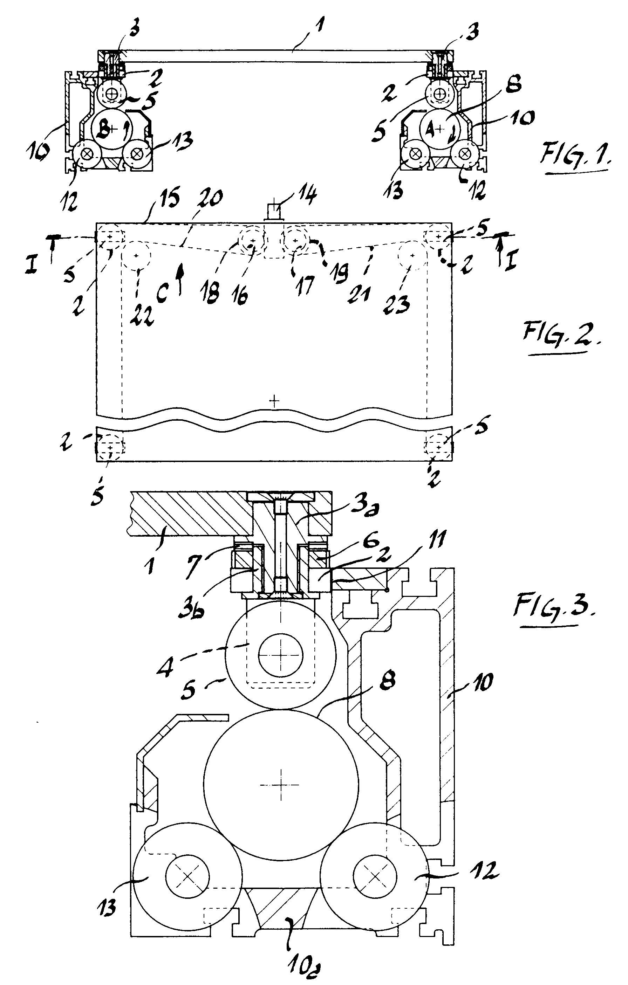

Dans le mode de réalisation des figures 1, 2, 3 et 4, l'axe autour duquel est monté tournant le galet 2 comporte une partie fixe 3a et une partie mobile 3b en rotation autour de la partie 3a, en forme de douille dont une extrémité 4 est en forme de chape pour supporter en rotation un galet 5. La douille 3b est en outre solidaire en rotation d'une poulie crantée 6 dont on expliquera la fonction ci-après. L'empilage axial que forme cette douille 3b, le galet 2 et la poulie crantée 6 est appuyé contre une butée à aiguilles 7 qui transmet la charge (poids) de la palette 1 au galet 4. On mentionnera qu'il est possible de dissocier l'axe des galets latéraux 2 de celui 3 de pivotement du galet d'entraînement 5. Dans ce cas les galets 2 sont portés par un coin de la palette alors que l'axe 3 est situé plus à l'intérieur de l'angle de la palette.

Comme on le voit à la figure 2, chaque palette comporte quatre galets 2 de guidage latéral et quatre galets 5 au moyen desquels la palette est entraînée le long d'un chemin de guidage qui sera défini ultérieurement.

Chaque galet 5 est en contact, puisque dans ce mode de réalisation c'est par son intermédiaire que la palette 1 y repose, avec un tube tournant 8, 9. Les tubes 8 et 9 sont de même diamètre et tournent sur eux-mêmes en sens inverses A et B. Selon une technique connue, la rotation d'un tube entraîne la rotation du galet 5 par friction. Si le galet 5 a son plan de rotation perpendiculaire à l'axe du tube 8, 9 sur lequel il repose, la palette 1 est immobile le long des tubes 8, 9. Si en revanche, selon cette technique connue, on incline le plan de rotation du galet 5 par rapport à cette position perpendiculaire à l'axe du tube 8, 9, la rotation du tube 8, 9 entraîne en plus de la rotation du galet 5, son déplacement par rapport au tube 8, 9 le long d'une hélice de celui-ci. On engendre donc un déplacement de la palette 1 le long de l'axe des tubes 8,9. Plus l'inclinaison du plan de rotation du galet 5 est importante, plus le pas de l'hélice est important et plus pour une rotation unitaire donnée de chaque tube 8 et 9, la translation de la palette est importante. On comprend donc qu'en faisant varier progressivement l'inclinaison du plan de rotation du galet 5, on peut obtenir une variation progressive, selon une loi prédéterminée de la variation de la vitesse de la palette 1 que ce soit à son démarrage ou lors de son arrêt.

Le tube 8, 9 est maintenu le long d'un chemin de guidage défini par un bâti 1O dont la rive supérieure 11 coopère avec les galets 2 latéraux de chaque palette, au moyen de galets de soutien 12, 13, montés tournants sur la partie inférieure de ce bâti 1O sensiblement à l'aplomb de la rive 11, de sorte que la génératrice supérieure de chacun des tubes 8, 9 reste complètement dégagée pour qu'il puisse être parcouru par les galets 5.

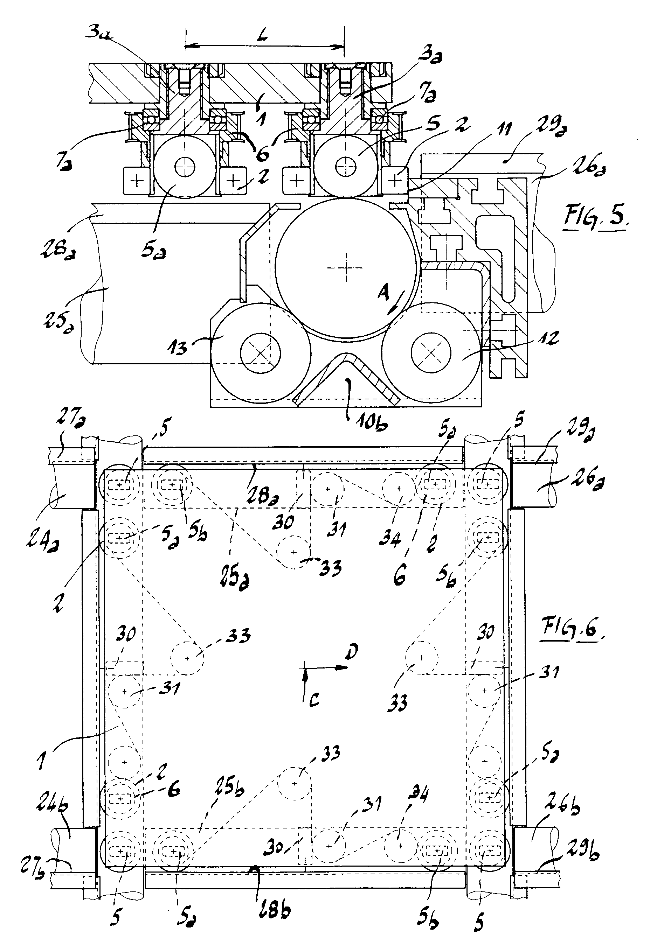

A la figure 3, les galets de soutien 12 et 13 sont disposés de place en place le long du bâti 1O en forme de profilé qui possède une aile inférieure continue 1Oa. A la figure 4, variante de réalisation de la figure 3, les galets 12 et 13 sont montés pivotants dans un boîtier indépendant 1Ob qui est rapporté au bâti 1O, en forme de profilé plus simple parce que dépourvu d'aile inférieure. Chaque boîtier est rapporté sur le profilé 1O au moyen de boulons de fixation coopérant avec les rainures en T du bâti 1O, les arbres 8 et 9 n'étant bordés que par ce profilé sans aile inférieure entre les boîtiers. Cette réalisation présente l'avantage de limiter les zones du bâti où des salissures pourraient s'agglutiner. En outre, chaque boîtier 1Ob constitue avantageusement la pièce de liaison du profilé avec des pieds inférieurs de soutien.

Dans le cas particulier de transport de charges sur des convoyeurs destinés à relier des stations d'usinage ou d'assemblage des pièces que les palettes 1 portent, les palettes doivent arrêtées soit dans des zones d'accumulation de celles-ci en des endroits déterminés du transporteur, soit au voisinage des stations où s'effectuent les opérations. Cet arrêt est généralement commandé par un obstacle fixe qui se trouve le long de la voie de guidage et qui agit sur un poussoir 14 faisant saillie par rapport au bord avant 15 d'une palette 1 se déplaçant dans le sens C. L'obstacle coopérant avec le poussoir 14 peut tout simplement être une palette précédente elle-même arrêtée le long de la voie de guidage.

Dans le mode de réalisation des figures 1 à 4 le poussoir 14 possède au moins une partie 14a en forme de double crémaillère engrènant avec deux roues dentées 16, 17, calées en rotation sur des poulies crantées 18, 19. Une courroie crantée 2O, 21 permet de transmettre le déplacement angulaire de chacune des poulies crantées 18, 19 sous l'effet de l'actionnement du poussoir 14 à chacune des poulies crantées 6 que possède la douille 3b précédemment décrite. Le brin de retour de chacune de ces courroies 2O, 21 passe sur une poulie 22, 23 qui joue le rôle de tendeur pour chacune d'elle.

Compte tenu du fait que les arbres 8 et 9 tournent dans des sens contraires, le pivotement des galets 5 coopérant avec l'arbre 8, est également en sens contraire du pivotement des galets 5 coopérant avec l'axe 9 sous le même déplacement du poussoir 14.

A la figure 2, le poussoir est représenté dans sa position enfoncée jusqu'à une butée non représentée ce qui a permis de placer le plan de rotation de chacun des galets 5 perpendiculairement à l'axe des tubes 8 et 9. La rotation sur eux-mêmes de ces tubes n'engendre donc aucun effort tendant à déplacer la palette 1, et la consommation d'énergie est extrêmement réduite puisque les galets 5 roulent sans frotter sur les tubes 8 et 9. Lorsque l'obstacle qui maintenait enfoncé le poussoir 14 dans sa position de la figure 2 s'échappe, un organe élastique de rappel non représenté sur la figure 2 mais qui peut être par exemple un ressort spirale attelé à au moins l'une des roues dentées 16 et 17 de manière à les faire tourner pour faire saillir le poussoir 14 jusqu'à une seconde position de celui-ci défini par une seconde butée non représentée, le plan de rotation des galets 5 s'incline sur l'axe des tubes 8 et 9, ce qui engendre un "embrayage" de la palette 1 qui est propulsée le long des axes de ces tubes dans le sens C. La force du ressort, les éléments de freinage que l'on pourra disposer aux différents points adéquats de la chaîne cinématique entre le poussoir 14 et chacun des galets 5 permettent de définir la loi d'accélération de la palette 1. Il en est de même pour que soit définie la loi de décélération de cette palette lorsque le poussoir 14 vient heurter un obstacle situé le long de la voie de guidage.

Il faut noter que la rotation inverse des tubes 8 et 9 permet d'équilibrer les efforts latéraux qui nécessairement naissent entre les tubes et les galets ceci à l'avantage des rives 11 qui ne sont que peu sollicitée pour guider la palette 1. En outre, l'avantage de cette disposition dans laquelle les tubes 8 et 9 sont également porteurs de la palette 1, réside dans le fait que plus la palette est chargée et plus les forces de friction entre les tubes 8 et 9 et les galets 5 sont élevées ; la force propulsive varie avantageusement dans le même sens que la charge de la palette.

La variante de réalisation représentée aux figures 5 et 6 est adaptée à un dispositif comportant au moins deux tronçons de voie de guidage perpendiculaires (ou une intersection). On y retrouve certains des éléments déjà décrits avec les mêmes références.

On remarquera que, dans cette variante, chacun des galets 5 d'entraînement disposé à un coin de la palette est jumelé avec un galet 5a le long d'un des côtés du coin et avec un galet 5b le long de l'autre côté. La distance L qui sépare les axes 3a de pivotement de ces galets est définie en fonction des intervalles séparant deux tronçons de tube consécutifs le long de la voie de guidage. Pour des raisons exposées par la suite, cette distance sera au moins égale au diamètre de l'un des tubes 8 ou 9 augmenté du diamètre de chaque galet 5, 5a, 5b.

Les galets latéraux 2 qui prennent appui sur la rive latérale 11 de guidage sont, dans cette variante, disposés au niveau des galets d'entraînement 5, 5a, 5b, et sont montés à rotations directement sur la partie 4 en forme de chape dont la surface extérieure est cylindrique. Au-dessus de ces galets latéraux (qui sont des roulements à billes) la poulie crantée 6 est calée en rotation sur l'ensemble 3a, 4 et coopère à la transmission des efforts verticaux vers la palette 1 au moyen d'une butée 7a qui n'est plus à aiguilles mais à billes.

L'avantage de cette disposition réside dans la diminution qu'elle autorise de la hauteur séparant la rive 11 de la génératrice supérieure des tubes 8,9. Cet avantage est recherché lorsque la voie de guidage possède une intersection ou est en deux tronçons perpendiculaires.

Aux figures 5 et 6, on a représenté un premier tronçon de voie matérialisé par les arbres tournants 8 et 9 et les rives de guidage 11.

Un second tronçon de voie de guidage, perpendiculaire au premier, est matérialisé par les tronçons de tubes 24a, 25a, 26a et 24b, 25b, 26b et des tronçons de rives 27a, 28a, 29a et 27b, 28b et 29b. Les tronçons de tubes et de rives sont séparés d'une distance légèrement supérieure à la valeur du diamètre d'un tube. Pour permettre le passage d'une palette 1 d'un tronçon au tronçon de voie perpendiculaire (par exemple selon les flèches C puis D figure 6), il faut admettre que les tronçons de tube 25a, 25b et de rives 28a, 28b sont disposés sur un module élévateur pouvant être déplacé verticalement entre deux niveaux ; l'un inférieur dans lequel le sommet des rives 28a, 28b est sous le niveau de la génératrice supérieure des tubs 8 et 9 et l'autre supérieur où les tronçons de rives 28a et 28b sont en alignement avec les rives 27 et 29 du tronçon de voie parcourue dans le sens D.

On notera sur la figure 5 que le niveau de ces rives (donc de la génératrice supérieure des tronçons de tubes 24 et 26) est au-dessus du niveau de la voie de guidage parcourue dans le sens C. L'écart de niveau doit être suffisant pour que les palettes puissent passer au-dessus des rives 11 en changeant de tronçon de voie.

La palette 1 est par ailleurs équipée de quatre poussoirs 3O qui sont soit en forme de crémaillère simple pour engrèner chacun avec une roue dentée solidaire d'une poulie crantée 31 comme dans l'exemple précédemment décrit, soit directement fixés à une courroie unique 32 sur un brin de celle-ci de direction constante entre deux poulies 31 crantées. Dans le cas de la figure 6, la courroie 32 est donc unique et coopère par l'extérieur avec chacune des poulies crantées 6 de chaque galet 5, 5a, 5b, et passe sur des poulies crantées 33 et 34 dont certaines servent à tendre la courroie. Ainsi quel que soit le poussoir actionné, tous les galets 5, 5a, 5b sont manoeuvrés en pivotement dans le même sens et avec la même amplitude. Cette disposition de commande synchronisée de l'orientation des galets implique que les arbres 8 et 9 et les tronçons d'arbres ou de tubes de la voie perpendiculaire tournent non plus en sens inverses mais dans le même sens.

Ainsi en fonctionnement, lorsque la palette 1 circule dans le sens C, elle parvient à l'intersection représentée à la figure 6. A cette intersection les tronçons de tube 25a,b et de rives 28a,b sont à leur niveau inférieur comme indiqué à la figure 5. Une butée non représentée, prévue sur la voie de guidage, actionne le poussoir 3O situé à l'avant de la palette dans le sens de son avance. Les galets 5, 5a, 5b sont en conséquence placés de manière que leur plan de rotation soit perpendiculaire à l'axe des tubes 8 et 9. La palette est donc "débrayée" des arbres 8 et 9. L'ensemble élévateur passe alors au niveau supérieur en emportant la palette 1 dont les galets 5, 5a, 5b sont à un niveau tel qu'ils peuvent passer au-dessus des rives 11. Une seconde action sur les poussoirs 3O incline les galets sur l'axe des tronçons de tubes 25a,b qui motorisés, sont alors entraînés en rotation. La palette peut alors progresser dans le sens D, le galet 5 de la figure 5 atteignant le tronçon de tube 26a avant que le galet 5a n'ait quitté le tronçon de tube 25a. On est alors assuré de la continuité du support et de l'entraînement de la palette au passage de la discontinuité entre le module élévateur et la voie des tubes 29a, 29b, car la distance séparant ces galets 5, 5a est supérieure à la discontinuité à franchir.

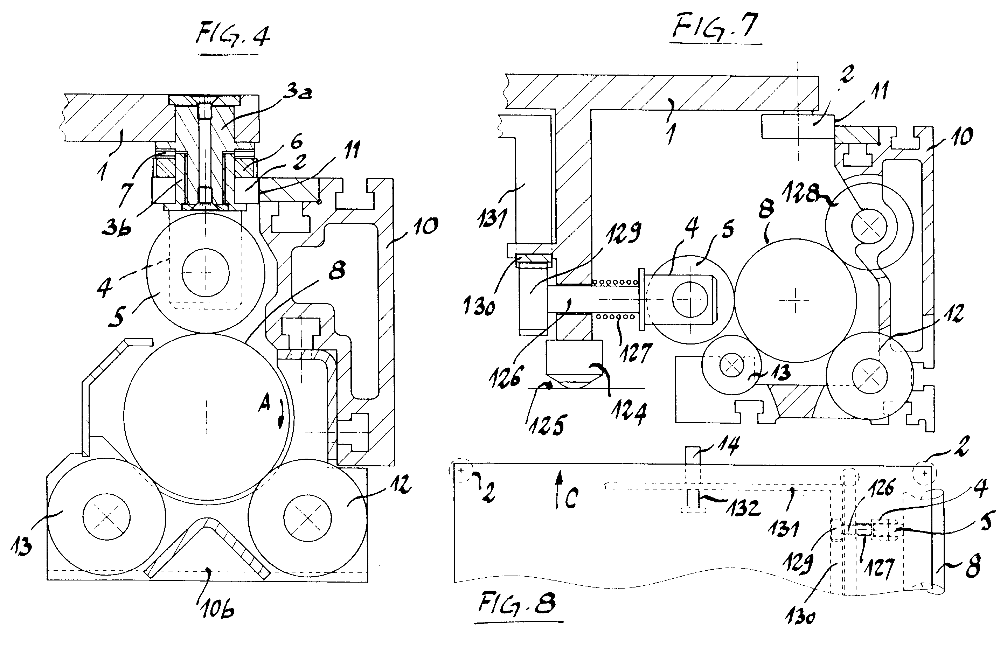

Aux figures 7 et 8 on retrouve certaines des dispositions déjà décrites en regard des figures précédentes avec les mêmes références. A la différence des variantes de réalisation déjà décrite, celle qui est illustrée par les figures 7 et 8 distingue les moyens de support vertical de la palette de ceux de son entraînement. Ainsi la palette 1 est équipée d'organes inférieurs de roulement 124 qui coopèrent avec une surface inférieure 125 solidaire du bâti 1O.

Chaque galet 5 est alors monté à pivotement autour d'un axe horizontal 126 et rappelé contre chaque tube tel que 8 par un ressort de rappel 127. L'effort exercé par le galet 5 contre le tube 8 est encaissé par les galets de support 12 et 128 portés à l'aplomb l'un de l'autre par le bâti 1O.

La modification de l'inclinaison du plan de rotation des galets 5 par rapport à l'axe des tubes 8 ou 9, est assurée par la coopération d'une roue dentée 129 solidaire de l'axe 126 et d'une crémaillère 13O solidaire du poussoir 114 par l'intermédiaire d'un étrier 131. Un ressort de rappel 132 replace, en l'absence d'obstacle agissant sur le poussoir 114, l'équipage mobile 13O, 131 dans une position dans laquelle le poussoir 14 est plus en saillie à l'avant de la palette 1 et le plan de rotation des galets 5 est incliné sur l'axe des tubes d'entraînement. On notera qu'à l'inverse de la variante de réalisation précédente, le sens d'inclinaison du plan de rotation des galets 5 par rapport aux tubes 8 et 9 est identique, compte tenu du fait que les tubes tournent en sens contraires et que les galets 5 coopèrent avec des génératrices opposées lorsque l'on passe d'un tube à l'autre. Dans le cas où les tubes 8 et 9 tournent dans le même sens, il conviendrait d'inverser le sens de pivotement de l'un des galets 5 par rapport à l'autre. Ceci pourrait être aisément réalisé en faisant passer l'une des crémaillères 130 au-dessus du pignon 129 comme dans la figure 7 et l'autre, celle qui commande le ou les pignons non représentés, sous le pignon correspondant. Le pivotement de ce galet s'en trouverait inversé par rapport au pivotement de l'autre.

La principale application de ce type de convoyeurs est destinée au cas où il convient de transmettre à la palette 1 une force d'entraînement qui soit indépendante de sa charge. On choisira par ailleurs un sens de rotation des tubes 8 et 9 de manière qu'avec l'inclinaison du plan de rotation des galets 5, l'effort tangentiel donc vertical entre les tubes 8 et 9 et les galets 5 soit dirigé vers le bas pour éviter un soulèvement d'une palette 1 trop légère ou trop peu chargée.

## Revendications

1. Dispositif de convoyage pour supports (1) de charges, généralement plans, comprenant une voie de guidage (10) latéral pour chaque support (1) et un moyen d'entraînement (8,9) de chaque support le long de cette voie, caractérisé en ce que le moyen d'entraînement comporte deux tubes ou arbres (8,9) tournant sur eux-mêmes et s'étendant le long de la voie de guidage (10) et au moins deux galets (5) d'entraînement portés par chaque support (1) de charge de manière connue en elle-même, en pivotement autour d'un axe (3) perpendiculaire à l'axe du tube (8,9) avec la surface duquel le galet est en contact.

2. Dispositif de convoyage selon la revendication 1, caractérisé en ce que chaque support (1) comporte au moins quatre galets (5) montés en pivotement autour d'axes (3) perpendiculaires au support, sous ce dernier pour reposer par paire sur la génératrice supérieure de chacun des tubes tournants (8,9).

3. Dispositif selon la revendication 1 ou la revendication 2, caractérisé en ce que les tubes ou arbres (8,9) tournent sur eux-mêmes en sens contraire l'un de l'autre.

4. Dispositif selon la revendication 3, caractérisé en ce que chaque support (1) comporte un mécanisme (14) de commande synchronisée de l'inclinaison des galet (5) autour de leur axe (3) comportant une poulie crantée (18) solidaire en rotation de chaque porte-galets (3b, 4) pivotant sur l'axe (3) correspondant et deux courroies crantées (2O, 21) de transmission à ces poulies (6) d'un mouvement de commande engendré par le déplacement d'un poussoir (14) mobile, prévu à l'avant de chaque support (1).

5. Dispositif selon la revendication 4, caractérisé en ce que le poussoir (14) est en forme d'une crémaillère double engrènant avec deux pignons (16,17) opposés, chacun solidaire en rotation d'une poulie (18,19) d'entraînement d'une courroie (20,21).

6. Dispositif selon la revendication 5, caractérisé en ce que le poussoir (14) est soumis à l'effet d'un ressort de rappel tendant à le placer dans une position initiale correspondant à une inclinaison des galets (5) d'entraînement telle que leur plan de rotation n'est pas perpendiculaire à l'axe des tubes rotatifs (8,9).

7. Dispositif selon la revendication 2 caractérisé en ce que les tubes ou arbres (8,9) tournent sur eux-mêmes dans le même sens.

8. Dispositif selon l'une des revendications 1, 2, 3 et 7, caractérisé en ce que chaque support est en forme de palette quadrangulaire et comporte un premier groupe de quatre galets montés en pivotement autour d'axes (3) perpendiculaires au plan de la palette et à chacun de ses coins, chaque galet étant doublé le long de chaque côté du coin correspondant, d'un galet secondaire éloigné du galet de coin d'une valeur déterminée, fonction de la largeur des interruptions entre tronçons successifs de tube ou axe d'entraînement.

9. Dispositif selon la revendication 8, caractérisé en ce que chaque support comporte un mécanisme de commande synchronisée de l'inclinaison des galets autour de leur axe comportant une poulie crantée solidaire en rotation de chaque porte-galet pivotant et une courroie crantée de transmission à toutes ces poulies d'un mouvement de commande engendré par le déplacement de l'un des quatre poussoirs mobiles perpendiculairement à chaque bord du support.

10. Dispositif selon la revendication 9, caractérisé en ce que chaque poussoir est en forme d'une crémaillère engrènant avec un pignon solidaire en rotation d'une poulie d'entraînement de la courroie.

11. Dispositif selon l'une quelconque des revendications 8 à 1O caractérisé en ce que la voie de guidage comporte au moins deux tronçons perpendiculaires l'un à l'autre, situés à des niveaux différents, et au moins un module élévateur comportant deux tronçons d'arbres d'entraînement perpendiculaires aux arbres d'entraînement du tronçon inférieur de la voie et mobiles verticalement entre une position inactive où ils sont situés sous le niveau des arbres du tronçon de voie inférieur et une position où ils sont dans l'alignement des axes du tronçon de voie supérieur.

12. Dispositif selon la revendication 11, caractérisé en ce que la distance séparant l'axe de pivotement de chaque galet d'entraînement de l'un ou l'autre du galet qui lui est adjacent est au moins égale au diamètre d'un tube d'entraînement augmenté de la valeur du diamètre d'un galet.

13. Dispositif selon la revendication 1, caractérisé en ce que chaque galet (5) est monté à pivotement autour d'un axe (26) sensiblement parallèle au support (1) et est appliqué contre le tube ou l'arbre (8,9) correspondant au moyen d'un organe élastique (27), le support présentant des organes inférieurs de roulement (24).

14. Dispositif selon la revendication 1, caractérisé en ce que chaque support (1) comporte un mécanisme de modification de l'inclinaison des galets (5) par rapport à l'axe des tubes (8,9) comprenant une roue dentée (29) solidaire en rotation de chaque porte-galets (4) pivotant sur l'axe correspondant et deux crémaillères (3O) engrènant avec ces roues (29) et solidaires l'une de l'autre et d'un poussoir (14) situé à l'avant de la palette mobile par rapport à cette dernière à l'encontre d'un organe élastique de rappel (32).

15. Dispositif selon l'une quelconque des revendications précédentes caractérisé en ce qu'il comporte un bâti fixe (1O) dont la partie supérieure détermine des rives latérales (11) de guidage des supports (1) en regard desquelles ces supports possèdent des galets (2) latéraux de roulement.

16. Dispositif selon la revendication 15, caractérisé en ce que les galets latéraux sont situés autour des galets d'entraînement.

17. Dispositif selon la revendication 13 et la revendication 15, caractérisé en ce que le bâti comporte entre les rives latérales une surface de roulement (25) inférieure pour les organes (24) inférieurs du support (1).

18. Dispositif selon l'une quelconque des revendications précédentes, caractérisé en ce que les arbres ou tubes (8, 9) tournants sont soutenus par des galets fous (12,13,28) montés à rotation sur une partie inférieure du bâti (1O) situé sous les rives de guidage (11).

19. Dispositif selon l'une quelconque des revendications précédentes caractérisé en ce que les arbres ou tubes (8,9) tournants sont soutenus par des galets fous (12,13,28) montés à rotation dans un boîtier (1Oa) rapporté sur une partie inférieure du bâti (1O) sous les rives (11) de guidage.

20. Dispositif selon la revendication 19, caractérisé en ce que chaque boîtier (1Oa) constitue une pièce de liaison entre le bâti de la voie de guidage et un pied de support.

## Claims

1. A conveyor apparatus for load supports (1) which are generally flat, comprising a lateral guide path (10) for each support (1) and a means (8, 9) for entraining each support along said path, characterised in that the entrainment means comprises two tubes or shafts (8, 9) which rotate about themselves and which extend along the guide path (10) and at least two entrainment rollers (5) which are carried by each load support (1) in per se known manner for pivotal movement about an axis (3) perpendicular to the axis of the tube (8, 9), with the surface of which the roller is in contact.

2. A conveyor apparatus according to claim 1 characterised in that each support (1) comprises at least four rollers (5) which are mounted for pivotal movement about axes (3) perpendicular to the support below the latter to rest in pairs on each upper generatrix of each of the rotary tubes (8, 9).

3. An apparatus according to claim 1 or claim 2 characterised in that the tubes or shafts (8, 9) rotate about themselves in mutually opposite directions.

4. An apparatus according to claim 3 characterised in that each support (1) comprises a mechanism (14) for synchronised control of the inclination of the rollers (5) about their axis (1) comprising a notched pulley (18) which is fixed in respect of rotary movement to each roller carrier (3b, 4) which pivots on the corresponding axis (3), and two notched belts (20, 21) for transmission to said pulleys (6) of a control movement produced by displacement of a movable push member (14) provided at the front of each support (1).

5. An apparatus according to claim 4 characterised in that the push member (14) is in the form of a double rack meshing with two oppositely disposed pinions (16, 17) which is each fixed in respect of rotary movement to a pulley (18, 19) for driving a belt (20, 21).

6. An apparatus according to claim 5 characterised in that the push member (14) is subjected to the force of a return spring which tends to place it in an initial position corresponding to an inclination of the entrainment rollers (5) such that their plane of rotation is not perpendicular to the axis of the rotary tubes (8, 9).

7. An apparatus according to claim 2 characterised in that the tubes or shafts (8, 9) rotate about themselves in the same direction.

8. An apparatus according to one of claims 1, 2, 3 and 7 characterised in that each support is in the form of a quadrangular pallet and comprises a first group of four rollers mounted for pivotal movement about axes (3) which are perpendicular to the plane of the pallet and at each of its corners, each roller being doubled along each side of the corresponding corner by a secondary roller which is spaced from the corner roller by a given value which is a function of the width of the interruptions between successive entrainment axis or tube portions.

9. An apparatus according to claim 8 characterised in that each support comprises a mechanism for synchronised control of the inclination of the rollers about their axis comprising a notched pulley which is fixed in respect of rotary movement to each pivotable roller carrier and a notched belt for transmission to all said pulleys of a control movement produced by the displacement of one of the four push members which are movable perpendicularly to each edge of the support.

10. An apparatus according to claim 9 characterised in that each push member is in the form of a rack meshing with a pinion which is fixed in respect of rotary movement to a pulley for driving the belt.

11. An apparatus according to any one of claims 8 to 10 characterised in that the guide path comprises at least two portions which are perpendicular to each other and disposed at different levels, and at least one elevator module comprising two entrainment shaft portions which are perpendicular to the entrainment shafts of the lower portion of the path and which are movable vertically between an inactive position in which they are below the level of the shafts of the lower path portion and a position in which they are in alignment with the axes of the upper path portion.

12. An apparatus according to claim 11 characterised in that the distance separating the axis of pivotal movement of each entrainment roller from one or other of the roller which is adjacent thereto is at least equal to the diameter of an entrainment tube increased by the value of the diameter of a roller.

13. An apparatus according to claim 1 characterised in that each roller (5) is mounted for pivotal movement about an axis (26) substantially parallel to the support (1) and is applied against the corresponding tube or shaft (8, 9) by means of a resilient member (27), the support having lower rolling members (24).

14. An apparatus according to claim 1 characterised in that each support (1) comprises a mechanism for modifying the inclination of the rollers (5) with respect to the axis of the tubes (8, 9) comprising a toothed wheel (29) which is fixed in respect of rotary movement to each roller carrier (4) pivoting on the corresponding axis and two racks (30) meshing with said wheels (29) and fixed with respect to each other and a push member (14) which is disposed at the front of the pellet and movable with respect to the latter against the force of a resilient return member (32).

15. An apparatus according to any one of the preceding claims characterised in that it comprises a fixed frame structure (10) of which the upper part defines lateral edges (11) for guiding the supports (1), facing which edges said supports have lateral rolling rollers (2).

16. An apparatus according to claim 15 characterised in that the lateral rollers are disposed around the entrainment rollers.

17. An apparatus according to claim 13 and claim 15 characterised in that the frame structure comprises between the lateral edges a lower rolling surface (25) for the lower members (24) of the support (1).

18. An apparatus according to any one of the preceding claims characterised in that the rotary shafts or tubes (8, 9) are supported by idle rollers (12, 13, 28) mounted rotatably on a lower part of the frame structure (10) which is disposed below the guide edges (11).

19. An apparatus according to any one of the preceding claims characterised in that the rotary shafts or tubes (8, 9) are supported by idle rollers (12, 13, 28) mounted rotatably in a casing (10a) which is fitted on to a lower part of the frame structure (10) below the guide edges (11).

20. An apparatus according to claim 19 characterised in that each casing (10a) constitutes a connecting portion between the frame structure of the guide path and a support leg.

## Patentansprüche

1. Fördervorrichtung für im allgemeinen ebene Lastträger, umfassend eine seitliche Führungsbahn (10) für jeden Träger (1) und eine Einrichtung (8,9) für den Antrieb eines jeden Trägers entlang dieser Bahn, dadurch gekennzeichnet, daß die Antriebseinrichtung zwei selbstdrehende und sich entlang der Führungsbahn (10) erstreckende Rohre oder Wellen (8,9) und wenigstens zwei Antriebsrollen (5) umfaßt, die in an sich bekannter Weise an jedem Lastträger (1) derart gehalten sind, daß sie um ein Achse (3) schwenkbar sind, die senkrecht zur Achse des Rohres (8,9) angeordnet ist, mit dessen Oberfläche sich die Rolle in Kontakt befindet.

2. Fördervorrichtung nach Anspruch 1, dadurch gekennzeichnet, daß jeder Träger (1) wenigstens vier Rollen (5) aufweist, die unter dem Träger schwenkbar um sich senkrecht zu dem Träger erstreckende Achsen (3) derart gelagert sind, daß sie paarweise auf der oberen Erzeugenden eines jeden sich drehenden Rohres (8,9) lasten.

3. Vorrichtung nach Anspruch 1 oder 2, dadurch gekennzeichnet, daß sich die selbstdrehenden Rohre oder Wellen (8,9) gegensinnig drehen.

4. Vorrichtung nach Anspruch 3, dadurch gekennzeichnet, daß jeder Träger (1) einen Mechanismus (14) zur Synchronsteuerung der Neigung der Rollen (5) um ihre Achse (3) hat, wobei dieser Mechanismus eine verzahnte Riemenscheibe (18) umfaßt, die drehbar mit jedem um die entsprechende Achse (3) schwenkbaren Rollenhalter (3b,4) verbunden ist, und zwei Zahnriemen (20,21) zur Übertragung einer Steuerbewegung, die durch die Verstellung eines an der Vorderseite jedes Träges (1) angeordneten mobilen Drückers (14) bewirkt wird, auf diese Riemenscheiben (6).

5. Vorrichtung nach Anspruch 4, dadurch gekennzeichnet, daß der Drücker (14) in Form einer Doppelzahnstange vorgesehen ist, die mit zwei einander gegenüberliegenden Ritzeln (16,17) in Eingriff steht, deren jedes mit einer Riemenscheibe (18,19) für den Antrieb eines Zahnriemens (20,21) drehbar verbunden ist.

6. Vorrichtung nach Anspruch 5, dadurch gekennzeichnet, daß der Drücker (14) der Wirkung einer Rückstellfeder ausgesetzt ist, die versucht, den Drücker in eine Ausgangsposition zu placieren, die einer Neigung der Antriebsrollen (5) dergestalt entspricht, daß ihre Rotationsebene nicht senkrecht zur Achse der sich drehenden Rohre (8,9) liegt.

7. Vorrichtung nach Anspruch 2, dadurch gekennzeichnet, daß sich die selbstdrehenden Rohre oder Wellen (8,9) gleichsinnig drehen.

8. Vorrichtung nach einem der Ansprüche 1, 2, 3 und 7, dadurch gekennzeichnet, daß jeder Träger die Form einer viereckigen Palette hat und eine erste Gruppe von vier Rollen aufweist, die schwenkbar um zur Palettenebene senkrechte Achsen (3) gelagert sind, und daß jede Eckrolle des Trägers entlang jeder Seite der entsprechenden Ecke um eine zweite Rolle verstärkt ist, die von der Eckrolle um einen Wert beabstandet ist, der in Abhängigkeit von der Größe der Unterbrechungen zwischen aufeinanderfolgenden Rohr- oder Antriebsachsenabschnitten bestimmt wird.

9. Vorrichtung nach Anspruch 8, dadurch gekennzeichnet, daß jeder Träger einen Mechanismus zur Synchronsteuerung der Neigung der Rollen um ihre Achse aufweist, wobei dieser Mechanismus eine mit jedem schwenkbaren Rollenhalter drehbar verbundene verzahnte Riemenscheibe und einen Zahnriemen umfaßt, der eine Steuerbewegung, die durch die Verstellung eines von vier senkrecht zu jedem Rand des Trägers angeordneten mobilen Drückern bewirkt wird, auf all diese Riemenscheiben überträgt.

10. Vorrichtung nach Anspruch 9, dadurch gekennzeichnet, daß jeder Drücker in Form einer Zahnstange vorgesehen ist, die mit einem Ritzel in Eingriff steht, das mit einer Riemenscheibe für den Antrieb des Riemens drehbar verbunden ist.

11. Vorrichtung nach einem der Ansprüche 1 bis 10, dadurch gekennzeichnet, daß die Führungsbahn (10) wenigstens zwei zueinander senkrechte und auf unterschiedlichen Ebenen liegende Abschnitte und wenigstens ein Hebemodul umfaßt, welches zwei Antriebswellenabschnitte hat, die senkrecht zu den Antriebswellen des unteren Abschnitts der Bahn angeordnet sind und vertikal zwischen einer inaktiven Position, in der sie sich unter der Ebene der Wellen des unteren Bahnabschnitts befinden, und einer Position, in der sie mit den Achsen des oberen Bahnabschnitts fluchten, bewegbar sind.

12. Vorrichtung nach Anspruch 11, dadurch gekennzeichnet, daß der Abstand, der die Schwenkachse jeder Antriebsrolle von der einen oder anderen ihr benachbarten Rolle trennt, zumindest gleich groß ist wie der um den Wert des Durchmessers einer Rolle vergrößerte Durchmesser eines Antriebsrohres.

13. Vorrichtung nach Anspruch 1, dadurch gekennzeichnet, daß jede Rolle (5) um eine zu dem Träger (1) im wesentlichen parallele Achse (26) schwenkbar gelagert ist und über ein elastisches Organ (27) an dem entsprechenden Rohr oder der Welle (8,9) anliegt, wobei der Träger mit unteren Rollkörpern (24) versehen ist.

14. Vorrichtung nach Anspruch 1, dadurch gekennzeichnet, daß jeder Träger (1) einen Mechanismus zur Änderung der Neigung der Rollen (5) relativ zur Achse der Rohre (8,9) aufweist, wobei dieser Mechanismus ein mit jedem um die entsprechende Achse schwenkbaren Rollenhalter (4) drehbar verbundenes Zahnrad (29) und zwei Zahnstangen (30) umfaßt, die mit diesen Rädern (29) in Eingriff stehen und miteinander verbunden sind und einen Drücker (14) haben, der sich an der Vorderseite der Palette befindet und gegen die Wirkung eines elastischen Rückstellorgans (32) relativ zu der Palette bewegbar ist.

15. Vorrichtung nach einem der vorhergehenden Ansprüche, gekennzeichnet durch ein festes Gestell (10), dessen oberer Bereich seitliche Führungsränder (11) für die Träger (1) bestimmt, wobei diese Träger den seitlichen Führungsrändern gegenüberstehende seitliche Transportrollen (2) besitzen.

16. Vorrichtung nach Anspruch 15, dadurch gekennzeichnet, daß die seitlichen Rollen um die Antriebsrollen angeordnet sind.

17. Vorrichtung nach Anspruch 13 und 15, dadurch gekennzeichnet, daß das Gestell (10) zwischen den seitlichen Rändern eine untere Transportfläche (25) für die unteren Organe (24) des Trägers (1) aufweist.

18. Vorrichtung nach einem der vorhergehenden Ansprüche, dadurch gekennzeichnet, daß die sich drehenden Wellen oder Rohre (8,9) durch Schlepprollen (12,13,28) gehalten sind, die an einem unter den Führungsrändern (11) gelegenen unteren Bereich des Gestells (10) drehbar gelagert sind.

19. Vorrichtung nach einem der vorhergehenden Ansprüche, dadurch gekennzeichnet, daß die sich drehenden Wellen oder Rohre (8,9) durch Schlepprollen (12,13,28) gehalten sind, die drehbar in einem Gehäuse (10a) gelagert sind, das unter den Führungsrändern (11) an einem unteren Bereich des Gestells (10) angebracht ist.

20. Vorrichtung nach Anspruch 19, dadurch gekennzeichnet, daß jedes Gehäuse (10a) ein Verbindungsteil zwischen dem Gestell der Führungsbahn und einem Fuß des Trägers bildet.
